# EUROPEAN PATENT APPLICATION

(11) **EP 4 693 982 A1**
(43) Date of publication of application: **11.02.2026**
(21) Application number: 24806346.3
(22) Date of filing: 28.04.2024
(51) Int. Cl.: H04L 1/1812, H04W 72/00

(54) **COMMUNICATION METHOD AND APPARATUS**

(30) Priority: 12.05.2023 CN 202310538829
(71) Applicant: Huawei Technologies Co., Ltd., Shenzhen, Guangdong 518129 (CN)
(72) Inventor: YANG, Ruonan, Shenzhen, Guangdong 518129 (CN); CHEN, Ying, Shenzhen, Guangdong 518129 (CN); ZHANG, Jiayin, Shenzhen, Guangdong 518129 (CN); WANG, Jun, Shenzhen, Guangdong 518129 (CN)
(74) Representative: Pfenning, Meinig & Partner mbB
(86) International application number: PCT/CN2024/090432
(87) International publication number: WO 2024/234990

(57) **Abstract**

This application discloses a communication method and apparatus. The method includes: A first apparatus determines, based on first information from a second apparatus and whether to perform HARQ feedback in a first HARQ process, to start or not to start a first timer after sending or receiving data of the first HARQ process. When the first timer is started, the first apparatus is in a low power consumption state. According to the method, the first apparatus may determine, based on the first information from the second apparatus, whether to start the first timer, so as to determine whether the first apparatus needs to be in the low power consumption state, reducing power consumption of the first apparatus. In addition, when determining not to start the first timer, the first apparatus may continue to monitor a downlink control channel of the first HARQ process, so that a system throughput can be improved.

## Description

### CROSS-REFERENCE TO RELATED APPLICATIONS

This application claims priority to Chinese Patent Application No. 202310538829.6, filed with the China National Intellectual Property Administration on May 12, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

Hybrid automatic repeat (hybrid automatic repeat request, HARQ) is a method for improving data transmission reliability. In a HARQ technology, after a network device sends data to a terminal device over a physical downlink shared channel (physical downlink shared channel, PDSCH), the terminal device may perform HARQ feedback. For example, the terminal device sends HARQ-acknowledgment (acknowledgment, ACK) information to the network device. The network device determines, based on the HARQ-ACK information sent by the terminal device, whether the data is successfully transmitted, to improve data transmission reliability.

Currently, in some scenarios such as non-terrestrial network (Non-terrestrial network, NTN), a HARQ feedback disabling mechanism is introduced. HARQ feedback is not required for a HARQ process in which HARQ feedback is disabled, and HARQ feedback is required for a HARQ process in which HARQ feedback is enabled. After the HARQ feedback disabling mechanism is introduced, how to improve a system throughput needs to be further studied.

### SUMMARY

Embodiments of this application provide a communication method and apparatus, to improve a system throughput.

According to a first aspect, an embodiment of this application provides a communication method. The method may be performed by a first apparatus. The first apparatus may be a terminal device, or may be a chip or a circuit configured in the terminal device. This is not limited in this application.

The method includes: After receiving first information from a second apparatus, the first apparatus determines, based on the first information and whether to perform HARQ feedback in a first HARQ process, to start or not to start a first timer after sending or receiving data of the first HARQ process. When the first timer is started, the first apparatus is in a low power consumption state.

According to the method, the first apparatus may determine, based on the first information from the second apparatus, whether to start the first timer, so as to determine whether the first apparatus needs to be in the low power consumption state, reducing power consumption of the first apparatus. In addition, when determining not to start the first timer, the first apparatus may continue to monitor a downlink control channel of the first HARQ process, so that a system throughput can be improved.

In a possible design, the first apparatus may determine, in at least one of the following implementations, to start or not to start the first timer after sending or receiving the data of the first HARQ process:
Implementation 1: When the first HARQ process is a HARQ process in which HARQ feedback is performed, and the first information indicates a first state, the first apparatus determines to start the first timer after sending or receiving the data. In this implementation 1, when the first HARQ process is a HARQ process in which HARQ feedback is performed, the first apparatus may accurately and quickly determine, based on the first information in the first state after sending or receiving the first data, that the first timer needs to be started.

In a possible implementation, when the first information indicates the first state, downlink control information cannot indicate whether to perform HARQ feedback in the first HARQ process. In this way, when the first timer is started, the second apparatus does not send DCI of the first HARQ process, and the first apparatus does not miss detecting the DCI of the first HARQ process. In addition, when the first timer is started, the first apparatus may send HARQ feedback of the first data, and the second apparatus schedules data transmission based on the HARQ feedback, so that data transmission reliability can be improved.

Implementation 2: When the first HARQ process is a HARQ process in which HARQ feedback is performed, and the first information indicates a second state, the first apparatus determines not to start the first timer after sending or receiving the data. In this implementation 2, when the first HARQ process is a HARQ process in which HARQ feedback is performed, the first apparatus may accurately and quickly determine, based on the first information in the second state after sending or receiving the first data, that the first timer does not need to be started.

In a possible implementation, when the first information indicates the second state, the downlink control information can indicate whether to perform HARQ feedback in the first HARQ process. In this way, the first apparatus does not miss detecting the DCI of the first HARQ process, so that the system throughput can be improved.

Implementation 3: The first information indicates a plurality of time periods in which the first timer is allowed to be started, the plurality of time periods each have same duration, and a time interval between every two adjacent time periods in the plurality of time periods is a first time interval. In any one of the plurality of time periods, if the first HARQ process is a HARQ process in which HARQ feedback is performed, the first apparatus determines to start the first timer after sending or receiving the data; or if the first HARQ process is a HARQ process in which no HARQ feedback is performed, the first apparatus determines not to start the first timer after sending or receiving the data; and/or in a time period other than the plurality of time periods, the first apparatus determines not to start the first timer after sending or receiving the data.

In this implementation 3, the first apparatus may accurately and quickly determine, based on the first information indicating the plurality of time periods and whether HARQ feedback is performed in the first HARQ process, whether to start the first timer after sending or receiving the first data.

In a possible design, the first timer is a HARQ RTT timer. This design is easy to implement.

In a possible design, when the first HARQ process is a HARQ process in which HARQ feedback is performed, the first apparatus may monitor a downlink control channel of the first HARQ process in a first time period. The first time period satisfies one of the following conditions:
Condition 1: An interval between a start time unit of the first time period and an end time unit in which the first apparatus receives the data is a second time interval. A value of the second time interval is kmac+N+M. kmac is a value of a third time interval. The third time interval is a time interval between an uplink time unit and a downlink time unit that have a same number on a second apparatus side. N is a quantity of time units occupied by HARQ feedback of the data. M is a specified offset value. In this way, in the second time interval after the end time unit in which the first apparatus receives the first data, the first apparatus does not monitor the downlink control channel of the first HARQ process, so that the power consumption of the first apparatus can be reduced.
Condition 2: A time interval between a start time unit of the first time period and an end time unit in which the first apparatus sends HARQ feedback of the data is a fourth time interval, and a value of the fourth time interval is a first value. According to the condition 2, the first apparatus does not monitor the downlink control channel of the first HARQ process in the fourth time interval after the end time unit in which the first apparatus sends the HARQ feedback of the first data, so that the power consumption of the first apparatus can be reduced.
Condition 3: A time interval between a start time unit of the first time period and an end time unit in which the first apparatus sends the data is a fifth time interval, and a value of the fifth time interval is a second value. According to the condition 3, the first apparatus does not monitor the downlink control channel of the first HARQ process in the fifth time interval after the end time unit in which the first apparatus sends the first data, so that the power consumption of the first apparatus can be reduced.

In a possible design, M is one of the following: 1, 2, 3, 4, or P+DeltaPDCCH. P is 1, 2, 3, or 4. DeltaPDCCH is a value of a time interval between a first time unit and a start time unit of a first downlink control channel occasion. The first time unit is a time unit determined based on kmac+N+P. The first downlink control channel occasion is a downlink control channel occasion that is after the first time unit and that is closest to the first time unit. This design provides a plurality of possible implementations of M, and the implementations are flexible.

According to a second aspect, an embodiment of this application provides a communication method. The method may be performed by a second apparatus. The second apparatus may be a network device, or may be a chip or a circuit configured in the network device. This is not limited in this application.

The method includes: After obtaining first information, the second apparatus sends the first information to a first apparatus. The first information is used by the first apparatus to determine, based on the first information and whether to perform HARQ feedback in a first HARQ process, to start or not to start a first timer after data of the first HARQ process is sent or received. When the first timer is started, the first apparatus is in a low power consumption state.

According to the method, the second apparatus may send the first information to the first apparatus, so that the first apparatus can determine, based on the first information from the second apparatus, whether to start the first timer, so as to determine whether the first apparatus needs to be in the low power consumption state, reducing power consumption of the first apparatus. In addition, when determining not to start the first timer, the first apparatus may continue to monitor a downlink control channel of the first HARQ process, so that a system throughput can be improved.

In a possible design, the first information may be used for determining, in at least one of the following implementations, to start or not to start the first timer after the data of the first HARQ process is sent or received:
Implementation 1: When the first HARQ process is a HARQ process in which HARQ feedback is performed, and the first information indicates a first state, the first information is used for determining to start the first timer after the data is sent or received. In this implementation 1, when the first HARQ process is a HARQ process in which HARQ feedback is performed, the first apparatus may accurately and quickly determine, based on the first information in the first state after sending or receiving the first data, that the first timer needs to be started.

In a possible implementation, when the first information indicates the first state, downlink control information cannot indicate whether to perform HARQ feedback in the first HARQ process. In this way, when the first timer is started, the second apparatus does not send DCI of the first HARQ process, and the first apparatus does not miss detecting the DCI of the first HARQ process. In addition, when the first timer is started, the first apparatus may send HARQ feedback of the first data, and the second apparatus schedules data transmission based on the HARQ feedback, so that data transmission reliability can be improved.

Implementation 2: When the first HARQ process is a HARQ process in which HARQ feedback is performed, and the first information indicates a second state, the first information is used for determining not to start the first timer after the data is sent or received. In this implementation 2, when the first HARQ process is a HARQ process in which HARQ feedback is performed, the first apparatus may accurately and quickly determine, based on the first information in the second state after sending or receiving the first data, that the first timer does not need to be started.

In a possible implementation, when the first information indicates the second state, the downlink control information can indicate whether to perform HARQ feedback in the first HARQ process. In this way, the first apparatus does not miss detecting the DCI of the first HARQ process, so that the system throughput can be improved.

Implementation 3: The first information indicates a plurality of time periods in which the first timer is allowed to be started, the plurality of time periods each have same duration, and a time interval between every two adjacent time periods in the plurality of time periods is a first time interval. In any one of the plurality of time periods, if the first HARQ process is a HARQ process in which HARQ feedback is performed, the first information is used for determining to start the first timer after the data is sent or received; or if the first HARQ process is a HARQ process in which no HARQ feedback is performed, the first information is used for determining not to start the first timer after the data is sent or received; and/or in a time period other than the plurality of time periods, the first information is used for determining not to start the first timer after the data is sent or received.

In this implementation 3, the first apparatus may accurately and quickly determine, based on the first information indicating the plurality of time periods and whether HARQ feedback is performed in the first HARQ process, whether to start the first timer after sending or receiving the first data.

In a possible design, the first timer is a HARQ RTT timer. This design is easy to implement.

In a possible design, when the first HARQ process is a HARQ process in which HARQ feedback is performed, the second apparatus sends a downlink control channel of the first HARQ process in a first time period. The first time period satisfies one of the following conditions:
Condition 1: An interval between a start time unit of the first time period and an end time unit in which the first apparatus receives the data is a second time interval. A value of the second time interval is kmac+N+M. kmac is a value of a third time interval. The third time interval is a time interval between an uplink time unit and a downlink time unit that have a same number on a second apparatus side. N is a quantity of time units occupied by HARQ feedback of the data. M is a specified offset value. In this way, the second apparatus does not send the downlink control channel of the first HARQ process in the second time interval after the end time unit in which the first apparatus receives the first data. Because the second time interval is greater than kmac+N, uplink and downlink collision between the downlink control channel sent by the second apparatus and the HARQ feedback of the first data sent by the first apparatus can be avoided, improving communication quality.
Condition 2: A time interval between a start time unit of the first time period and an end time unit in which the first apparatus sends HARQ feedback of the data is a fourth time interval, and a value of the fourth time interval is a first value. According to the condition 2, the second apparatus does not send the downlink control channel of the first HARQ process in the fourth time interval after the end time unit in which the first apparatus sends the HARQ feedback of the first data, so that the uplink and downlink collision between the downlink control channel sent by the second apparatus and the HARQ feedback of the first data sent by the first apparatus can be avoided, improving the communication quality.
Condition 3: A time interval between a start time unit of the first time period and an end time unit in which the first apparatus sends the data is a fifth time interval, and a value of the fifth time interval is a second value. According to the condition 3, the second apparatus does not send the downlink control channel of the first HARQ process in the fifth time interval after the end time unit in which the first apparatus sends the first data, so that the uplink and downlink collision between the downlink control channel sent by the second apparatus and the first data sent by the first apparatus can be avoided, improving communication quality.

In a possible design, M is one of the following: 1, 2, 3, 4, or P+DeltaPDCCH. P is 1, 2, 3, or 4. DeltaPDCCH is a value of a time interval between a first time unit and a start time unit of a first downlink control channel occasion. The first time unit is a time unit determined based on kmac+N+P. The first downlink control channel occasion is a downlink control channel occasion that is after the first time unit and that is closest to the first time unit. This design provides a plurality of possible implementations of M, and the implementations are flexible.

According to a third aspect, an embodiment of this application provides a communication apparatus, including units configured to perform the steps in any one of the foregoing aspects.

According to a fourth aspect, an embodiment of this application provides a communication apparatus, including a processor. The processor is configured to perform the methods described in the foregoing aspects.

Optionally, the apparatus may further include a memory, configured to store instructions and data. The memory is coupled to the processor. When executing the instructions stored in the memory, the processor may implement the methods described in the foregoing aspects.

According to a fifth aspect, an embodiment of this application provides a communication system, including a first apparatus configured to perform the method according to the first aspect, and a second apparatus configured to perform the method according to the second aspect.

According to a sixth aspect, an embodiment of this application further provides a computer program product including computer executable instructions. When the computer program product is run, some or all steps of the method in any one of the foregoing aspects are performed.

According to a seventh aspect, an embodiment of this application further provides a computer-readable storage medium. The computer-readable storage medium stores a computer program. When the computer program is executed by a computer, the computer is enabled to perform the method provided in any one of the foregoing aspects.

According to an eighth aspect, an embodiment of this application further provides a chip. The chip is configured to read a computer program stored in a memory, to perform the method provided in any one of the foregoing aspects.

According to a ninth aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete device.

For technical effects that can be achieved in any one of the third aspect to the ninth aspect, refer to descriptions of technical effects that can be achieved in any one of the possible designs in the first aspect or the second aspect. Details are not repeated.

### BRIEF DESCRIPTION OF DRAWINGS

FIG. 1 is a diagram of an architecture of a communication system according to an embodiment of this application;
FIG. 2 is a diagram of an architecture of a non-terrestrial network communication system according to an embodiment of this application;
FIG. 3 is a diagram of an architecture of a 5^{th} generation (5^{th} generation, 5G) satellite communication system according to an embodiment of this application;
FIG. 4 is a diagram of data transmission;
FIG. 5 is a flowchart of a communication method according to an embodiment of this application;
FIG. 6A is a first diagram of a second time interval according to an embodiment of this application;
FIG. 6B is a second diagram of a second time interval according to an embodiment of this application;
FIG. 6C is a diagram of a fourth time interval according to an embodiment of this application;
FIG. 6D is a diagram of a fifth time interval according to an embodiment of this application;
FIG. 7 is a flowchart of another communication method according to an embodiment of this application;
FIG. 8 is a flowchart of still another communication method according to an embodiment of this application;
FIG. 9 is a flowchart of yet another communication method according to an embodiment of this application;
FIG. 10 is a diagram of a structure of a communication apparatus according to an embodiment of this application; and
FIG. 11 is a diagram of a structure of another communication apparatus according to an embodiment of this application.

### DESCRIPTION OF EMBODIMENTS

Embodiments of this application provide a communication method and apparatus. The method and the apparatus are based on a same technical concept or are based on a similar technical concept. The method and the apparatus have a similar problem-resolving principle. Therefore, for implementations of the apparatus and the method, refer to each other. Details are not repeated.

In descriptions of embodiments of this application, unless otherwise specified, a quantity of nouns indicate "a singular noun or a plural noun", that is, "one or more". "At least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. "At least one of the following items (pieces)" or a similar expression thereof means any combination of these items (pieces), including any combination of singular items (pieces) or plural items (pieces).

In addition, it should be understood that in descriptions of this application, terms such as "first" and "second" are merely used for distinguishing and description, but should not be understood as indicating or implying relative importance, or should not be understood as indicating or implying a sequence.

The following describes in detail embodiments of this application with reference to accompanying drawings.

A communication method provided in embodiments of this application may be applied to a 4^{th} generation (4^{th} generation, 4G) communication system, for example, long term evolution (long term evolution, LTE), or may be applied to a 5G communication system, for example, 5G new radio (new radio, NR), or may be applied to various future evolved communication systems, for example, a 6^{th} generation (6^{th} generation, 6G) communication system, or a space-air-ground-sea integrated communication system. The method provided in embodiments of this application may be applied to a terrestrial network communication system or an NTN communication system. The NTN communication system may be, for example, a satellite communication system, or may include an uncrewed aerial vehicle, a high altitude platform station (high altitude platform station, HAPS), and another air network device. This is not limited in this application.

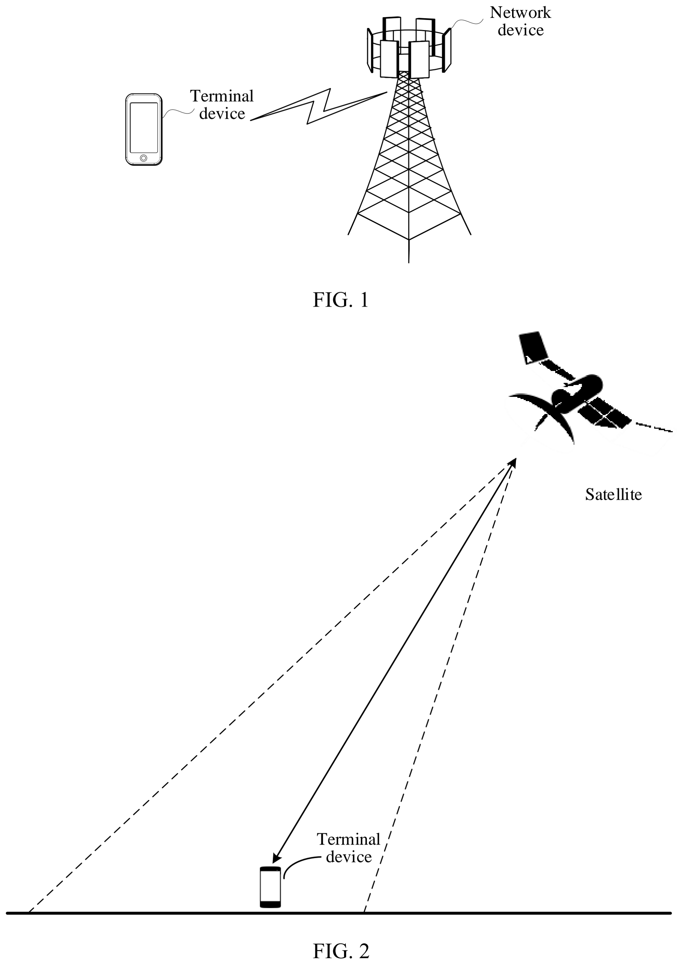

FIG. 1 shows an architecture of a communication system to which an embodiment of this application is applicable. As shown in FIG. 1, the communication system includes a terminal device and a network device. The following separately provides descriptions thereof.

The terminal device may also be referred to as user equipment (user equipment, UE), a mobile station (mobile station, MS), a mobile terminal (mobile terminal, MT), or the like, is a device having a wireless transceiver function, and may be configured to provide voice or data connectivity for a user. Alternatively, the terminal device may be an internet of things device.

For example, the terminal device includes a handheld device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a vehicle, a bicycle, an electric vehicle, an airplane, a ship, a train, or a high-speed railway), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. Alternatively, the terminal device may be another device that has a terminal function. For example, the terminal device may be a device that functions as a terminal in device-to-device (device-to-device, D2D) communication.

The network device is a device in a wireless network, for example, includes a radio access network (radio access network, RAN) node or a radio access network device that connects the terminal device to the wireless network. Currently, some examples of network devices include a next generation base station (gNodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), and integrated access and backhaul (integrated access and backhaul, IAB) in 5G. Optionally, the network device may alternatively be a network device in a future communication system (for example, a 6G communication system).

In a network structure, the network device may alternatively be a central unit (central unit, CU), a distributed unit (distributed unit, DU), a CU-control plane (control plane, CP), or a CU-user plane (user plane, UP), or the network device may include a CU and a DU. The CU and the DU are separately disposed, or may be included in a same network element, for example, a BBU. It may be understood that the network device is divided into the CU and the DU from the perspective of a logical function. The CU is connected to the DU through an F1 interface. On behalf of a gNB, the CU may be connected to a core network through an NG interface. The CU and the DU may be physically separated, or may be deployed together. This is not specifically limited in embodiments of this application. One CU may be connected to one DU, or a plurality of DUs may share one CU, so that costs can be reduced, and network extension can be easily performed. The CU and the DU may be split based on a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed on the CU, and a remaining radio link control (radio link control, RLC) layer, media access control (media access control, MAC) layer, physical layer (PHY), and the like are deployed on the DU. Embodiments of this application are not completely limited to the foregoing protocol stack splitting manner, and there may be another splitting manner.

In addition, the network device may alternatively be a radio unit (radio unit, RU, or the like). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, O-RAN) system, the CU may be referred to as an O-CU (open CU), the DU may be referred to as an O-DU (open DU), the CU-CP may be referred to as an O-CU-CP (open CU-CP), and the CU-UP may be referred to as an O-CU-UP (open CU-UP).

Based on the descriptions of the architecture of the communication system shown in FIG. 1, the method provided in embodiments of this application may also be applicable to an NTN communication system. In embodiments of this application, a satellite communication system is used as an example of the NTN communication system.

As shown in FIG. 2, the NTN communication system includes a satellite and a terminal device. For explanations of the terminal device, refer to the foregoing related descriptions of the terminal device in FIG. 1. The satellite may also be referred to as a high altitude platform station, a high altitude aircraft, or a satellite base station. When the NTN communication system is associated with a terrestrial network communication system, the satellite may be considered as one or more network devices in an architecture of the terrestrial network communication system. For a structure and a function of the satellite, refer to the foregoing descriptions of the network device shown in FIG. 1.

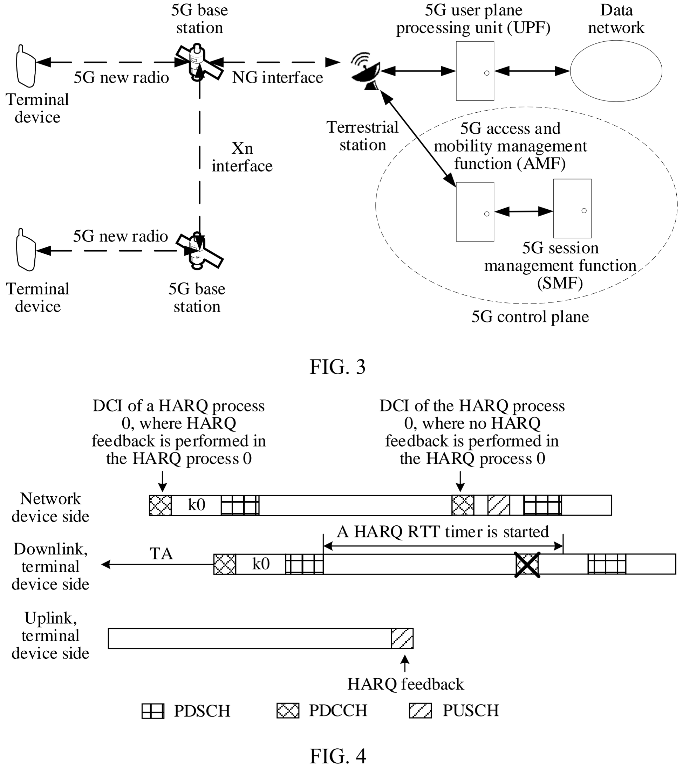

Using 5G as an example, an architecture of a 5G satellite communication system is shown in FIG. 3. A terrestrial terminal device accesses a network through a 5G new radio. A 5G base station is deployed on a satellite, and is connected to a terrestrial core network through a radio link. In addition, there are radio links between satellites to implement signaling exchange and user data transmission between network devices. Devices and interfaces in FIG. 3 are described as follows.

A 5G core network is configured to implement at least one of the following functions: user access control, mobility management, session management, user security authentication, charging, and other services. The 5G core network may include a plurality of functional units, and the plurality of functional units may include a control plane functional unit and a data plane functional unit. The control plane functional unit includes, for example, an access and mobility management function (access and mobility management function, AMF), and is responsible for functions such as user access management, security authentication, and mobility management. The user plane functional unit includes, for example, a user plane function (user plane function, UPF), and is responsible for managing functions such as user plane data transmission and traffic statistics collection.

A terrestrial station is responsible for forwarding signaling and service data between the satellite and the 5G core network.

5G new radio is a radio link between the terminal device and the network device.

An Xn interface is an interface between 5G network devices and is used for signaling exchange such as handover.

An NG interface is an interface between the 5G network device and the 5G core network and is used for exchanging signaling such as non-access stratum (Non-access stratum, NAS) of a core network and service data of a user.

In this application, both the network device in the terrestrial network communication system and the satellite in the NTN communication system are regarded as network devices. An apparatus configured to implement a function of a network device may be a network device; or may be an apparatus that can support a network device in implementing the function, for example, a chip system, and the apparatus may be mounted in the network device. It may be understood that when the method provided in embodiments of this application is applied to the NTN communication system, an action performed by the network device may be applied to the satellite for execution.

In this application, an apparatus configured to implement a function of a terminal device may be a terminal device, or may be an apparatus, for example, a chip system, that can support the terminal device in implementing the function, and the apparatus may be mounted in the terminal device.

In this application, the chip system may include a chip, or may include a chip and another discrete device.

To make embodiments of this application clearer, the following briefly describes concepts and some content that are related to embodiments of this application.

### 1. HARQ process

HARQ is a method for improving data transmission reliability. In a HARQ technology, a receive end stores a data packet that is incorrectly decoded in a HARQ buffer (buffer), and combines the data packet that is incorrectly decoded with a subsequently received retransmitted data packet, to obtain a data packet that is more reliable than that obtained through separate decoding. This process may be referred to as soft combination. The receive end decodes the combined data packet, and continues to perform retransmission and soft combination if the decoding still fails.

In HARQ, whether a received data packet is incorrect is determined through cyclic redundancy check (cyclic redundancy check, CRC) check. The CRC check is performed after soft combination. The receive end indicates, based on HARQ feedback (also referred to as acknowledgment information), whether CRC check succeeds. For example, if the CRC check succeeds, the receive end sends a positive acknowledgment (acknowledgment or positive acknowledgment, ACK); or if the CRC check fails, the receive end sends a negative acknowledgment (negative acknowledgment, NACK).

A stop-and-wait protocol (stop-and-wait protocol) is used in the HARQ to send data. In the stop-and-wait protocol, after sending a transport block (transport block, TB), a transmit end stops and waits for HARQ feedback. However, the transmit end stops and waits for the HARQ feedback after each time of transmission, resulting in a low throughput. Therefore, a plurality of parallel stop-and-wait processes (stop-and-wait processes) are used, and each stop-and-wait process may also be referred to as a HARQ process (HARQ process). When waiting for HARQ feedback of one HARQ process, the transmit end may use another HARQ process to continue to send data, so that data can be transmitted continuously. Each HARQ process requires an independent HARQ buffer at the receive end, to perform soft combination on received data.

### 2. HARQ feedback disabling mechanism

In some scenarios such as NTN, the HARQ feedback disabling mechanism is introduced. HARQ feedback is not required for a HARQ process in which HARQ feedback is disabled, and HARQ feedback is required for a HARQ process in which HARQ feedback is enabled. A network device may indicate, by using a radio resource control (radio resource control, RRC) message and/or downlink control information (downlink control information, DCI), a terminal device whether to perform HARQ feedback.

3. A time unit generally indicates a unit of time. For example, the time unit may be but is not limited to a subframe (subframe), a slot (slot), a symbol, a millisecond (ms), or the like. The symbol may be a time domain symbol (for example, an orthogonal frequency division multiplexing (orthogonal frequency division multiplexing, OFDM) symbol) or the like.

4. In this application, that HARQ feedback is required may also be referred to as: HARQ feedback is performed, HARQ feedback is not disabled, or HARQ feedback is enabled; and that HARQ feedback is not required may also be referred to as: No HARQ feedback is performed, or HARQ feedback is disabled.

5. In this application, a downlink control channel is, for example, a physical downlink control channel (physical downlink control channel, PDCCH) and/or a narrowband physical downlink control channel (narrowband physical downlink control channel, NPDCCH). A downlink shared channel is, for example, a physical downlink shared channel (physical downlink shared channel, PDSCH) and/or a narrowband physical downlink shared channel (narrowband physical downlink shared channel, NPDSCH). An uplink shared channel is, for example, a physical uplink shared channel (physical uplink shared channel, PUCCH) and/or a narrowband physical uplink shared channel (narrowband physical uplink shared channel, NPUCCH).

6. In this application, "when...", "if..., ...", and "if..., ..." may represent a same meaning, and may be replaced with each other.

Currently, as shown in FIG. 4, if HARQ feedback is required for a HARQ process, after receiving or sending data of the HARQ process, a terminal device starts a HARQ round-trip time (round-trip time, RTT) timer (HARQ RTT Timer) of the HARQ process. When the HARQ RTT timer is started, the terminal device does not monitor a physical downlink control channel of the HARQ process.

When the HARQ RTT timer is started, if performing HARQ feedback is changed to performing no HARQ feedback in the HARQ process, and a network device sends, to the terminal device, DCI used for scheduling transmission of next data in the HARQ process, the terminal device cannot receive the DCI. Consequently, a system throughput is reduced.

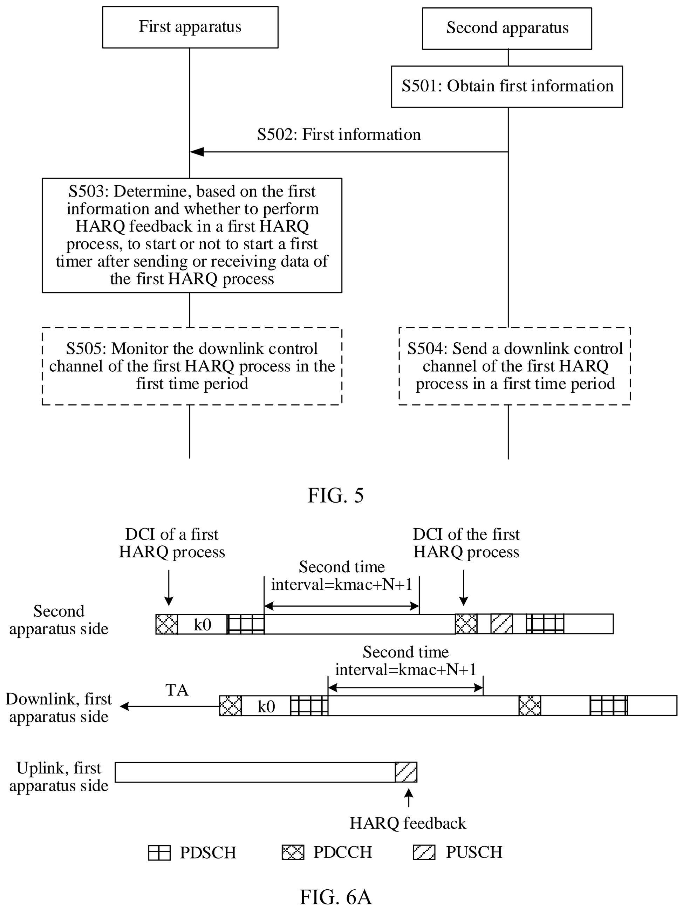

An embodiment of this application provides a communication method. The method may be applied to the communication system shown in FIG. 1 to FIG. 3. The following specifically describes a procedure of the method with reference to a flowchart shown in FIG. 5.

S501: A second apparatus obtains first information.

The second apparatus may be a network device, or may be an apparatus, for example, a chip system or a module, used in the network device to implement a function of the network device. The first information may be generated by the second apparatus, or may be obtained by the second apparatus from another apparatus.

S502: The second apparatus sends the first information to a first apparatus. Correspondingly, the first apparatus receives the first information from the second apparatus.

The first apparatus may be a terminal device, or may be an apparatus, for example, a chip system or a module, used in the terminal device to implement a function of the terminal device.

In this application, the first information may be carried in an RRC message, or may be carried in DCI.

S503: The first apparatus determines, based on the first information and whether to perform HARQ feedback in a first HARQ process, to start or not to start a first timer after sending or receiving data of the first HARQ process (referred to as first data for short below). For example, the first timer may be a HARQ RTT timer.

A state of the first timer may be related to a state of the first apparatus. In some examples, when the first timer is started, the first apparatus is in a low power consumption state. For example, when the first timer is started, the first apparatus does not monitor a downlink control channel of the first HARQ process. In some other examples, when the first timer is not started, the first apparatus may be in a monitoring state, and may monitor a downlink control channel of the first HARQ process, so as to receive DCI of the first HARQ process from the second apparatus.

In some possible manners, the first apparatus may determine to start the first timer immediately after sending or receiving the first data, so that the first apparatus can be in the low power consumption state within a period of time after sending or receiving the first data, reducing power consumption of the first apparatus. If the first apparatus is an apparatus (for example, an internet of things device) that needs to rely on a battery for power supply, a service life of a battery of the first apparatus may be increased, increasing a service life of the first apparatus.

In some other possible manners, the first apparatus may determine not to start the first timer after sending or receiving the first data, so that after sending or receiving the first data, the first apparatus can continue to monitor the downlink control channel of the first HARQ process, improving a system throughput.

In still some other possible manners, the first apparatus may determine to start the first timer after first duration for sending or receiving the first data. The first duration may be preset, may be determined by the first apparatus, or may be set by another apparatus for the first apparatus. For example, the first duration may be duration of one or more DRX-inactivity timers (drx-Inactivity Timers). When the DRX-inactivity timer is started, the first apparatus may continuously receive a plurality of data packets. In this way, after transmission of the data packets is completed, the first apparatus may be in the low power consumption state, so that power consumption of the first apparatus can be reduced. If the first apparatus is an apparatus (for example, an internet of things device) that needs to rely on a battery for power supply, a service life of a battery of the first apparatus may be increased, increasing a service life of the first apparatus.

In this application, whether HARQ feedback is performed in the first HARQ process may be indicated by the second apparatus to the first apparatus by using the RRC message and/or the DCI, or HARQ feedback may be performed in all HARQ processes by default. The following describes a manner of indicating, by using the RRC message and/or the DCI, whether HARQ feedback is performed in the first HARQ process.

### 1. The first data is downlink data.

In some possible manners, the second apparatus may send an RRC message including a bitmap #1 to the first apparatus, and the bitmap #1 may indicate whether to perform HARQ feedback in the first HARQ process. For example, when the bitmap #1 is 01, it indicates that a 1^{st} HARQ process is a HARQ process in which HARQ feedback is performed, and a 2^{nd} HARQ process is a HARQ process in which no HARQ feedback is performed.

In some other possible manners, the second apparatus sends an RRC message including a bitmap #1 to the first apparatus, and the bitmap #1 may indicate whether to perform HARQ feedback in the first HARQ process. When the second apparatus configures that the DCI may indicate whether to perform HARQ feedback, the second apparatus may send DCI #1 to the first apparatus. The DCI #1 is used for inverting a configuration indicated by the bitmap #1. For example, when the bitmap #1 is 01, it indicates that a 1^{st} HARQ process is a HARQ process in which HARQ feedback is performed, and a 2^{nd} HARQ process is a HARQ process in which no HARQ feedback is performed. The DCI #1 is used for inverting the configuration indicated by the bitmap #1. In this way, the DCI #1 may indicate that the 1^{st} HARQ process is a HARQ process in which no HARQ feedback is performed, and the 2^{nd} HARQ process is a HARQ process in which HARQ feedback is performed.

In still some other possible manners, when the second apparatus configures that the DCI may indicate whether to perform HARQ feedback, the second apparatus may send DCI #2 to the first apparatus. The DCI #2 directly indicates whether HARQ feedback is performed in the first HARQ process.

In some examples, a first field in the DCI #2 may indicate whether HARQ feedback is performed in the first HARQ process, and the first field may occupy one bit. When a value of the first field is a value #1 (for example, 0), it indicates that the first HARQ process is a HARQ process in which HARQ feedback is performed. When a value of the first field is a value #2 (for example, 1), it indicates that the first HARQ process is a HARQ process in which no HARQ feedback is performed.

In some other examples, state information of a HARQ feedback resource in the DCI #2 may indicate whether to perform HARQ feedback in the first HARQ process. When a value of the state information is a value #3 (for example, 0000), it indicates that the first HARQ process is a HARQ process in which no HARQ feedback is performed. When a value of the state information is a value other than the value #3, it indicates that the first HARQ process is a HARQ process in which HARQ feedback is performed.

2. The first data is uplink data. The second apparatus may indirectly indicate, by indicating a mode of the first HARQ process, whether HARQ feedback is performed in the first HARQ process. When the mode of the first HARQ process is a HARQ mode A, the first HARQ process is a HARQ process in which HARQ feedback is performed. When the mode of the first HARQ process is a HARQ mode B, the first HARQ process is a HARQ process in which no HARQ feedback is performed.

In some possible manners, the second apparatus may send an RRC message including a bitmap #2 to the first apparatus, and the bitmap #2 indicates the mode of the first HARQ process. For example, when the bitmap #2 is 01, it indicates that a mode of a 1^{st} HARQ process is the HARQ mode A, and a mode of a 2^{nd} HARQ process is the HARQ mode B.

In some other possible manners, the second apparatus sends an RRC message including a bitmap #2 to the first apparatus, and the bitmap #2 indicates the mode of the first HARQ process. When the second apparatus configures that the DCI may indicate the mode of the HARQ process, the second apparatus may send DCI #3 to the first apparatus. The DCI #3 is used for inverting a configuration indicated by the bitmap #2. For example, when the bitmap #2 is 01, it indicates that a mode of a 1^{st} HARQ process is the HARQ mode A, and a mode of a 2^{nd} HARQ process is the HARQ mode B. The DCI #3 is used for inverting the configuration indicated by the bitmap #2. In this way, the DCI #3 may indicate that the mode of the 1^{st} HARQ process is the HARQ mode B, and the mode of the 2^{nd} HARQ process is the HARQ mode A.

In still some other possible manners, when the second apparatus configures that the DCI may indicate the mode of the HARQ process, the second apparatus may send DCI #4 to the first apparatus. The DCI #4 may directly indicate the mode of the first HARQ process. For example, a second field in the DCI #4 may indicate the mode of the first HARQ process, and the second field may occupy one bit. When a value of the second field is a value #4 (for example, 0), it indicates that the mode of the first HARQ process is the HARQ mode A. When a value of the second field is a value #5 (for example, 1), it indicates that the mode of the first HARQ process is the HARQ mode B.

The following describes a possible implementation of S503 with reference to an implementation 1 to an implementation 3. The implementation 1 to the implementation 3 may be used separately. In a case in which no conflict exists, the implementation 1 to the implementation 3 may alternatively be used in combination.

Implementation 1: When the first HARQ process is a HARQ process in which HARQ feedback is performed, and the first information indicates a first state, the first apparatus may determine to start the first timer after sending or receiving the first data.

In some possible manners, when the first information indicates the first state, the DCI cannot indicate whether to perform HARQ feedback in the first HARQ process. For example, the first data is downlink data, and the first information is an RRC message named downlink HARQ-FeedbackDisabled-DCI (dlHARQ-FeedbackDisabled-dci). When a value of the first information is a value #6 (for example, 0 or disabled (disabled)), the first information indicates the first state, and the DCI cannot indicate whether to perform HARQ feedback in the first HARQ process. After the first information is received, when the first HARQ process is a HARQ process in which HARQ feedback is performed, the first apparatus may determine to start the first timer after receiving the first data. For another example, the first data is uplink data, and the first information is an RRC message named uplink HARQ mode-DCI (ulHARQmode-dci). When a value of the first information is a value #6 (for example, 0 or disabled), the first information indicates the first state, and the DCI cannot indicate whether to perform HARQ feedback in the first HARQ process. After the first information is received, when the first HARQ process is a HARQ process in which HARQ feedback is performed, the first apparatus may determine to start the first timer after sending the first data.

In some other possible manners, when the first information indicates the first state, the first information may indicate that after the first data is sent or received, the first timer is started for the HARQ process in which HARQ feedback is performed. For example, when a value of the first information is a value #6 (for example, 0), the first information indicates the first state. After the first information is received, when the first HARQ process is a HARQ process in which HARQ feedback is performed, the first apparatus may determine to start the first timer after sending or receiving the first data.

In this implementation 1, when the first HARQ process is a HARQ process in which HARQ feedback is performed, the first apparatus may accurately and quickly determine, based on the first information in the first state after sending or receiving the first data, that the first timer needs to be started.

Implementation 2: When the first HARQ process is a HARQ process in which HARQ feedback is performed, and the first information indicates a second state, the first apparatus may determine not to start the first timer after sending or receiving the first data.

In some possible manners, when the first information indicates the second state, the DCI can indicate whether to perform HARQ feedback in the first HARQ process. For example, the first data is downlink data, and the first information is an RRC message named dlHARQ-FeedbackDisabled-dci. When a value of the first information is a value #7 (for example, 1 or enabled (enabled)), the first information indicates the second state, and the DCI can indicate whether to perform HARQ feedback in the first HARQ process. After the first information is received, when the first HARQ process is a HARQ process in which HARQ feedback is performed, the first apparatus may determine not to start the first timer after receiving the first data. For another example, the first data is uplink data, and the first information is an RRC message named ulHARQmode-dci. When a value of the first information is a value #7 (for example, 1 or enabled), the first information indicates the second state, and the DCI can indicate whether to perform HARQ feedback in the first HARQ process. After the first information is received, when the first HARQ process is a HARQ process in which HARQ feedback is performed, the first apparatus may determine not to start the first timer after sending the first data.

In some other possible manners, when the first information indicates the second state, the first information may indicate that after the first data is sent or received, the first timer is not started for the HARQ process in which HARQ feedback is performed. For example, when a value of the first information is a value #7 (for example, 1), the first information indicates the second state. After the first information is received, when the first HARQ process is a HARQ process in which HARQ feedback is performed, the first apparatus may determine not to start the first timer after sending or receiving the first data.

In this implementation 2, when the first HARQ process is a HARQ process in which HARQ feedback is performed, the first apparatus may accurately and quickly determine, based on the first information in the second state after sending or receiving the first data, that the first timer does not need to be started.

Implementation 3: The first information indicates a plurality of time periods in which the first timer is allowed to be started. Optionally, the plurality of time periods each have same duration, and a time interval between every two adjacent time periods in the plurality of time periods is a first time interval. In other words, the first information may indicate a plurality of periodic time periods. The first apparatus may determine, based on a relationship between end time at which the first data is sent or received and the plurality of time periods and whether HARQ feedback is performed in the first HARQ process, to start or not to start the first timer after sending or receiving the data.

In some possible manners, in any one of the plurality of time periods, if the first HARQ process is a HARQ process in which HARQ feedback is performed, the first apparatus determines to start the first timer after sending or receiving the first data. In other words, if the end time at which the first apparatus sends or receives the first data belongs to any one of the plurality of time periods, and the first HARQ process is a HARQ process in which HARQ feedback is performed, the first apparatus may determine to start the first timer after sending or receiving the first data. Correspondingly, in any one of the plurality of time periods, if the first HARQ process is a HARQ process in which HARQ feedback is performed, the second apparatus sends, to the first apparatus after the first timer expires, DCI used for scheduling data of the first HARQ process. In this manner, power consumption of the first apparatus can be reduced. If the first apparatus is an apparatus (for example, an internet of things device) that needs to rely on a battery for power supply, a service life of a battery of the first apparatus may be increased, increasing a service life of the first apparatus.

In some other possible manners, in any one of the plurality of time periods, if the first HARQ process is a HARQ process in which no HARQ feedback is performed, the first apparatus determines not to start the first timer after sending or receiving the data. In other words, if the end time at which the first apparatus sends or receives the first data belongs to any one of the plurality of time periods, and the first HARQ process is a HARQ process in which no HARQ feedback is performed, the first apparatus may determine not to start the first timer after sending or receiving the first data. In this way, the second apparatus may send, to the first apparatus without waiting for the first timer to expire, DCI used for scheduling data of the first HARQ process, so that a system throughput is improved.

In still some other possible manners, in a time period other than the plurality of time periods, the first apparatus may determine not to start the first timer after sending or receiving the data. In other words, if the end time at which the first apparatus sends or receives the first data does not belong to any one of the plurality of time periods, regardless of whether HARQ feedback is performed in the first HARQ process, the first apparatus may determine not to start the first timer after sending or receiving the first data. In this way, the second apparatus may send, to the first apparatus without waiting for the first timer to expire, DCI used for scheduling data of the first HARQ process, so that a system throughput can be improved.

In this implementation 3, the first apparatus may accurately and quickly determine, based on the first information indicating the plurality of time periods and whether HARQ feedback is performed in the first HARQ process, whether to start the first timer after sending or receiving the first data.

In some possible manners, when the first HARQ process is a HARQ process in which HARQ feedback is performed, the method shown in FIG. 5 may further include S504 and S505.

S504: The second apparatus sends a downlink control channel of the first HARQ process in a first time period.

S505: The first apparatus monitors the downlink control channel of the first HARQ process in the first time period.

The first time period satisfies one of the following condition 1 to condition 3.

Condition 1: An interval between a start time unit of the first time period and an end time unit in which the first apparatus receives the first data is a second time interval. A value of the second time interval is kmac+N+M. kmac is a value of a third time interval. The third time interval is a time interval between an uplink time unit and a downlink time unit that have a same number on a second apparatus side. For example, if an interval between an uplink time unit numbered a and a downlink time unit numbered a that are on the second apparatus side is 1 ms, the third time interval is 1 ms, and a is a nonnegative integer. N is a quantity of time units occupied by HARQ feedback of the first data. For example, if the HARQ feedback of the first data occupies one subframe, N is 1. M is a specified offset value, and M may be a positive number. In this way, in the second time interval after the end time unit in which the first apparatus receives the first data, the second apparatus does not send the downlink control channel of the first HARQ process, and the first apparatus does not monitor the downlink control channel of the first HARQ process. Because the second time interval is greater than kmac+N, uplink and downlink collision between the downlink control channel sent by the second apparatus and the HARQ feedback of the first data sent by the first apparatus can be avoided, improving communication quality.

The following describes possible examples of the second time interval with reference to several possible examples of M.

In some examples, as shown in FIG. 6A, M may be 1, and the second time interval is kmac+N+1. M and the second time interval are, for example, in ms. For a half-duplex frequency division duplex (half-duplex frequency division duplex, HD-FDD) terminal device of type B, duration of uplink and downlink switching is 1 ms. In this way, when the first apparatus is an HD-FDD terminal device of type B, in this example, uplink and downlink collision between the downlink control channel sent by the second apparatus and the HARQ feedback of the first data sent by the first apparatus can be avoided, improving communication quality.

In some other examples, M may be 2, and the second time interval is kmac+N+2. M and the second time interval are, for example, in ms. For an HD-FDD terminal device of type B, duration of uplink and downlink switching is 1 ms. In this way, when the first apparatus is an HD-FDD terminal device of type B, in this example, 1 ms may be reserved for other processing. For example, the first apparatus may perform open-loop adjustment on a timing advance (Timing advance, TA) in the second time interval.

In still some other examples, M may be 3, and the second time interval is kmac+N+3. M and the second time interval are, for example, in ms. For an HD-FDD terminal device of type B, duration of uplink and downlink switching is 1 ms. In this way, when the first apparatus is an HD-FDD terminal device of type B, in this example, 2 ms may be reserved for other processing. For example, the first apparatus may start a DRX-inactivity timer in the second time interval. After the DRX-inactivity timer is started, the first apparatus may monitor the downlink control channel of the first HARQ process.

In yet some other examples, M may be 4, and the second time interval is kmac+N+4. M and the second time interval are, for example, in ms. For an HD-FDD terminal device of type B, duration of uplink and downlink switching is 1 ms. In this way, when the first apparatus is an HD-FDD terminal device of type B, in this example, 3 ms may be reserved for other processing. For example, the first apparatus may start a DRX-inactivity timer in the second time interval, and perform open-loop adjustment on a TA.

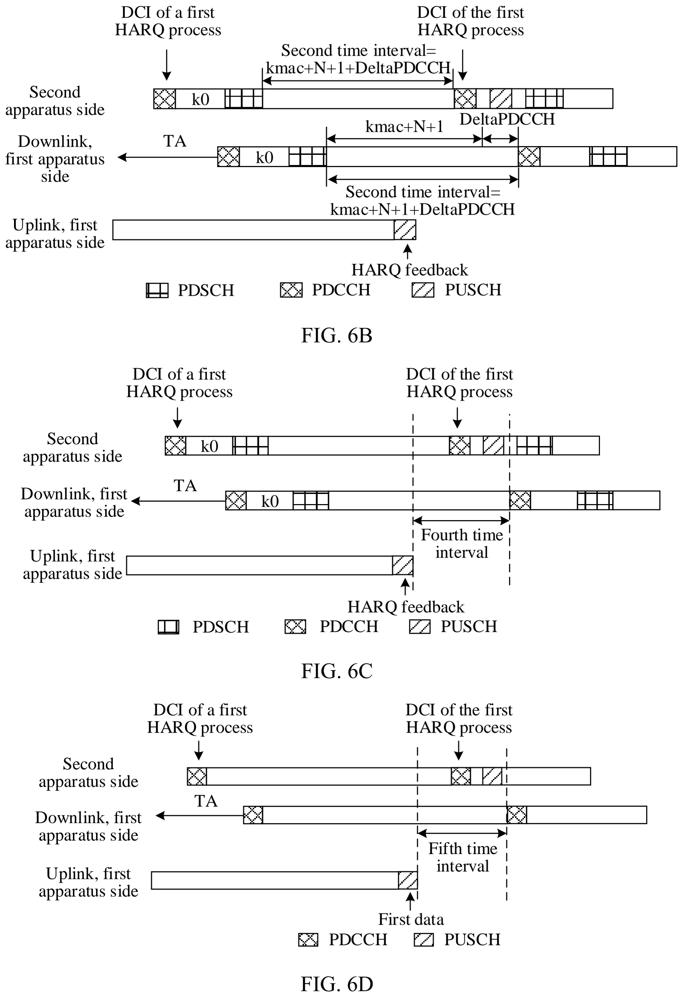

In yet some other examples, M may be P+DeltaPDCCH, and the second time interval is kmac+N+P+DeltaPDCCH. P may be 1, 2, 3, or 4. In FIG. 6B, an example in which P is 1 is used for description. DeltaPDCCH is a value of a time interval between a first time unit and a start time unit of a first downlink control channel occasion. The first time unit is a time unit determined based on kmac+N+P. For example, a time interval between the first time unit and an end time unit in which the first data is received is kmac+N+P. The first downlink control channel occasion is a downlink control channel occasion that is after the first time unit and that is closest to the first time unit. M and the second time interval are, for example, in ms.

Condition 2: A time interval between a start time unit of the first time period and an end time unit in which the first apparatus sends HARQ feedback of the first data is a fourth time interval, and a value of the fourth time interval is a first value. The fourth time interval may be shown in FIG. 6C. The first value may be a preset value (for example, 1 ms or 1 ms+DeltaPDCCH), or may be determined by the first apparatus or the second apparatus, or may be configured by another apparatus for the first apparatus or the second apparatus. According to the condition 2, the second apparatus does not send the downlink control channel of the first HARQ process in the fourth time interval after the end time unit in which the first apparatus sends the HARQ feedback of the first data, and the first apparatus does not monitor the downlink control channel of the first HARQ process, so that uplink and downlink collision between the downlink control channel sent by the second apparatus and the HARQ feedback of the first data sent by the first apparatus can be avoided, improving communication quality.

Condition 3: A time interval between a start time unit of the first time period and an end time unit in which the first apparatus sends the first data is a fifth time interval, and a value of the fifth time interval is a second value. The fifth time interval may be shown in FIG. 6D. The second value may be a preset value (for example, 1 ms or P+DeltaPDCCH, where P may be 1, 2, 3, or 4), or may be determined by the first apparatus or the second apparatus, or may be configured by another apparatus for the first apparatus or the second apparatus. The second value may be the same as or different from the first value. According to the condition 3, the second apparatus does not send the downlink control channel of the first HARQ process in the fifth time interval after the end time unit in which the first apparatus sends the first data, and the first apparatus does not monitor the downlink control channel of the first HARQ process, so that uplink and downlink collision between the downlink control channel sent by the second apparatus and the first data sent by the first apparatus can be avoided, improving communication quality.

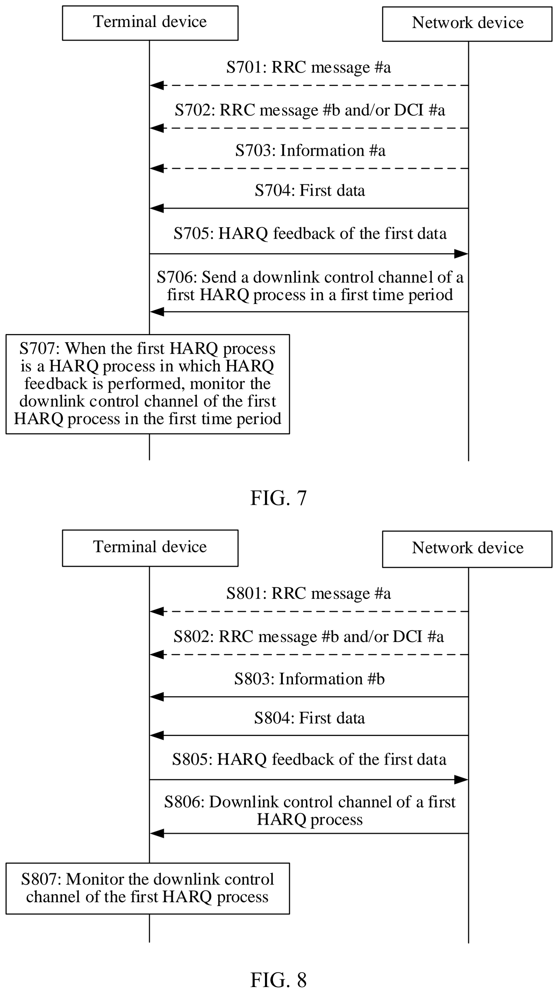

An embodiment of this application provides another communication method. The method shows a possible example of the method shown in FIG. 5, and may be applied to the communication system shown in FIG. 1 to FIG. 3. The following specifically describes a procedure of the method with reference to a flowchart shown in FIG. 7 by using an example in which a first apparatus is a terminal device, a second apparatus is a network device, and a first timer is a HARQ RTT timer.

S701: The network device sends an RRC message #a to the terminal device. The RRC message #a indicates that DCI can indicate whether to perform HARQ feedback in a first HARQ process.

For example, the RRC message #a is dlHARQ-FeedbackDisabled-dci. When dlHARQ-FeedbackDisabled-dci is in a second state, the DCI can indicate whether to perform HARQ feedback in the first HARQ process. For specific content of the RRC message #a, refer to the first information in the implementation 2 in S503. Details are not described herein again.

S701 is an optional step.

S702: The network device sends an RRC message #b and/or DCI #a to the terminal device. The RRC message #b and/or the DCI #a indicate/indicates whether to perform HARQ feedback in the first HARQ process.

For specific content of S702, refer to the descriptions of the manner of indicating, by using the RRC message and/or the DCI, whether to perform HARQ feedback in the first HARQ process in S503. Details are not described herein again.

S702 is an optional step. When the method shown in FIG. 7 does not include S702, it may be considered by default that HARQ feedback is required for all HARQs.

S703: The network device sends information #a to the terminal device. The information #a indicates that for the first HARQ process in which HARQ feedback is performed, a HARQ RTT timer of the first HARQ process is not started after data of the first HARQ process is sent or received.

The information #a may be carried in the RRC message or may be carried in the DCI. For specific content of the information #a, refer to the first information in the implementation 2 in S503. Details are not repeated.

Optionally, the information #a may indicate that if the DCI indicates that the first HARQ process is a HARQ process in which HARQ feedback is performed, the HARQ RTT timer of the first HARQ process is not started after the data of the first HARQ process is sent or received.

In addition, a sending sequence of the RRC message #a, the RRC message #b, and the information #a is not limited in this application, and a sending sequence of the information #a and the DCI #a is not limited either.

S703 is an optional step. For example, when the method shown in FIG. 7 includes or does not include S701, the method shown in FIG. 7 may include S703. For another example, when the method shown in FIG. 7 includes S701, the method shown in FIG. 7 may not include S703. In this case, it may be specified that for the first HARQ process in which HARQ feedback is performed, the HARQ RTT timer of the first HARQ process is not started after the data of the first HARQ process is sent or received; or if the DCI indicates that the first HARQ process is a HARQ process in which HARQ feedback is performed, the HARQ RTT timer of the first HARQ process is not started after the data of the first HARQ process is sent or received.

S704: The network device sends first data of the first HARQ process to the terminal device. The first data may be carried on a PDSCH or an NPDSCH.

After receiving the first data, the terminal device may determine to start or not to start the HARQ RTT timer. For a manner in which the terminal device determines to start or not to start the HARQ RTT timer, refer to the implementation 1 and the implementation 2 of S503. Details are not repeated.

Optionally, when the first HARQ process is a HARQ process in which HARQ feedback is performed, and at least one of the following conditions a1 to a3 is satisfied, the terminal device does not start the HARQ RTT timer after receiving the first data.

Condition a1: The terminal device receives the information #a in S703. The information #a indicates that the HARQ RTT timer of the first HARQ process is not started after the data of the first HARQ process is sent or received for the first HARQ process in which HARQ feedback is performed.

Condition a2: The terminal device receives the information #a in S703. The information #a indicates that if the DCI indicates that the first HARQ process is a HARQ process in which HARQ feedback is performed, the HARQ RTT timer of the first HARQ process is not started after the data of the first HARQ process is sent or received. In addition, the DCI #a in S702 indicates that HARQ feedback is performed in the first HARQ process.

Condition a3: The terminal device receives the RRC message #a in S701.

S705: When the first HARQ process is a HARQ process in which HARQ feedback is performed, the terminal device sends HARQ feedback of the first data. The HARQ feedback may be carried on a PUSCH or an NPUSCH.

S706: When the first HARQ process is a HARQ process in which HARQ feedback is performed, the network device sends a downlink control channel of the first HARQ process in a first time period. The downlink control channel may carry DCI used for scheduling next data of the first HARQ process.

The first time period may satisfy the following condition 1 or condition 2.

Condition 1: An interval between a start time unit of the first time period and an end time unit in which the terminal device receives the first data is a second time interval. The second time interval may be determined based on a TA of the terminal device. A value of the second time interval is kmac+N+M.

Condition 2: A time interval between a start time unit of the first time period and an end time unit in which the terminal device sends HARQ feedback of the first data is a fourth time interval. The fourth time interval may be determined based on a TA of the terminal device, and a value of the fourth time interval is a first value.

For specific content of the condition 1 and the condition 2, refer to descriptions of the condition 1 and the condition 2 in S505. For specific content of S706, refer to the descriptions of S504. Details are not described herein again.

S707: When the first HARQ process is a HARQ process in which HARQ feedback is performed, the terminal device monitors the downlink control channel of the first HARQ process in the first time period. The downlink control channel may carry DCI used for scheduling the next data of the first HARQ process.

For specific content of the first time period, refer to S706. For specific content of S707, refer to the descriptions of S505. Details are not repeated.

For example, in the first time period, the terminal device may start a DRX-inactivity timer, to blindly detect a PDCCH on a latest PDCCH occasion (occasion). For example, in the first time period, the terminal device blindly detects a PDCCH in user equipment-specific search space (UE-specific search space). If DCI carried by the blindly detected PDCCH is scrambled by a cell-radio network temporary identifier (cell-radio network temporary identifier, C-RNTI), it indicates that the DCI is used for data scheduling.

According to the method shown in FIG. 7, when the first HARQ process is a HARQ process in which HARQ feedback is performed, and the DCI can indicate whether to perform HARQ feedback in the first HARQ process, the terminal device does not start the HARQ RTT timer after receiving the first data of the first HARQ process. In this way, the terminal device does not miss detecting the DCI of the first HARQ process, so that a system throughput can be improved.

In addition, in the method, when the first HARQ process is a HARQ process in which HARQ feedback is performed, the network device does not send the downlink control channel of the first HARQ process in the second time interval after the end time unit in which the terminal device receives the first data and/or in the fourth time interval after the end time unit in which the terminal device sends the HARQ feedback of the first data, to avoid uplink and downlink collision between the downlink control channel and the HARQ feedback of the first data, improving communication quality.

An embodiment of this application provides still another communication method. The method shows another possible example of the method shown in FIG. 5, and may be applied to the communication system shown in FIG. 1 to FIG. 3. The following specifically describes a procedure of the method with reference to a flowchart shown in FIG. 8 by using an example in which a first apparatus is a terminal device, a second apparatus is a network device, and a first timer is a HARQ RTT timer.

S801: The network device sends an RRC message #a to the terminal device. The RRC message #a indicates that DCI can indicate whether to perform HARQ feedback in a first HARQ process.

S802: The network device sends an RRC message #b and/or DCI #a to the terminal device. The RRC message #b and/or the DCI #a indicate/indicates whether to perform HARQ feedback in the first HARQ process.

For specific content of S801 and S802, refer to S701 and S702. Details are not described herein again.

S803: The network device sends information #b to the terminal device. The information #b indicates a plurality of time periods in which the HARQ RTT timer is allowed to be started.

For specific content of the information #b, refer to the descriptions of the first information in the implementation 3 of S503.

A sending sequence of the RRC message #a, the RRC message #b, and the information #b is not limited in this application, and a sending sequence of the information #b and the DCI #a is not limited either.

S804: The network device sends first data of the first HARQ process to the terminal device. The first data may be carried on a PDSCH or an NPDSCH.

After receiving the first data, the terminal device may determine to start or not to start the HARQ RTT timer. For a manner in which the terminal device determines to start or not to start the HARQ RTT timer, refer to the implementation 3 of S503. Details are not described herein again.

S805: When the first HARQ process is a HARQ process in which HARQ feedback is performed, the terminal device sends HARQ feedback of the first data. The HARQ feedback may be carried on a PUSCH or an NPUSCH.

S806: The network device sends a downlink control channel of the first HARQ process. The downlink control channel may carry DCI used for scheduling next data of the first HARQ process.

In some possible manners, when the first HARQ process is a HARQ process in which HARQ feedback is performed, in any one of the plurality of time periods indicated by the information #b, the network device may send the downlink control channel of the first HARQ process after the HARQ RTT timer expires.

In some other possible manners, when the DCI #a indicates that the first HARQ process is a HARQ process in which HARQ feedback is performed, in any one of the plurality of time periods indicated by the information #b, the network device may send the downlink control channel of the first HARQ process after the HARQ RTT timer expires.

In still some other possible manners, when the first HARQ process is a HARQ process in which HARQ feedback is performed, if the terminal device completes receiving of the first data in a time period other than the plurality of time periods indicated by the information #b, the network device sends the downlink control channel of the first HARQ process in a first time period. The first time period is determined based on an end time unit in which the terminal device receives the first data or an end time unit in which the terminal device sends the HARQ feedback of the first data. Optionally, the first time period is a time period other than the plurality of time periods indicated by the information #b. For specific content of the first time period, refer to S706. Details are not described herein again.

S807: The terminal device monitors the downlink control channel of the first HARQ process. The downlink control channel may carry DCI used for scheduling the next data of the first HARQ process.

In some possible manners, when the first HARQ process is a HARQ process in which HARQ feedback is performed, in any one of the plurality of time periods indicated by the information #b, the terminal device may monitor the downlink control channel of the first HARQ process after the HARQ RTT timer expires.

In some other possible manners, when the DCI #a indicates that the first HARQ process is a HARQ process in which HARQ feedback is performed, in any one of the plurality of time periods indicated by the information #b, the terminal device may monitor the downlink control channel of the first HARQ process after the HARQ RTT timer expires.

In still some other possible manners, when the first HARQ process is a HARQ process in which HARQ feedback is performed, if the terminal device completes receiving of the first data in a time period other than the plurality of time periods indicated by the information #b, the terminal device monitors the downlink control channel of the first HARQ process in a first time period. For specific content of the first time period, refer to S706 and S806. Details are not described herein again.

For specific content of monitoring, by the terminal device, the downlink control channel of the first HARQ process, refer to S707. Details are not described herein again.

According to the method shown in FIG. 8, when the first HARQ process is a HARQ process in which HARQ feedback is performed, in any one of the plurality of time periods indicated by the information #b, after the first data of the first HARQ process is received, the terminal device may start the HARQ RTT timer, to ensure retransmission scheduling for data transmission of the first HARQ process, and improve transmission accuracy of information such as a medium access control (medium access control, MAC) layer control element (MAC control element, MAC CE).

When the first HARQ process is a HARQ process in which HARQ feedback is performed, the terminal device does not start the HARQ RTT timer after receiving the first data of the first HARQ process in a time period other than the plurality of time periods indicated by the information #b. In this way, the terminal device does not miss detecting the DCI of the first HARQ process, so that a system throughput can be improved.

In addition, in the method, when the first HARQ process is a HARQ process in which HARQ feedback is performed, the network device does not send the downlink control channel of the first HARQ process in a second time interval after the end time unit in which the terminal device receives the first data and/or in a fourth time interval after the end time unit in which the terminal device sends the HARQ feedback of the first data, to avoid uplink and downlink collision between the downlink control channel and the HARQ feedback of the first data, improving communication quality.

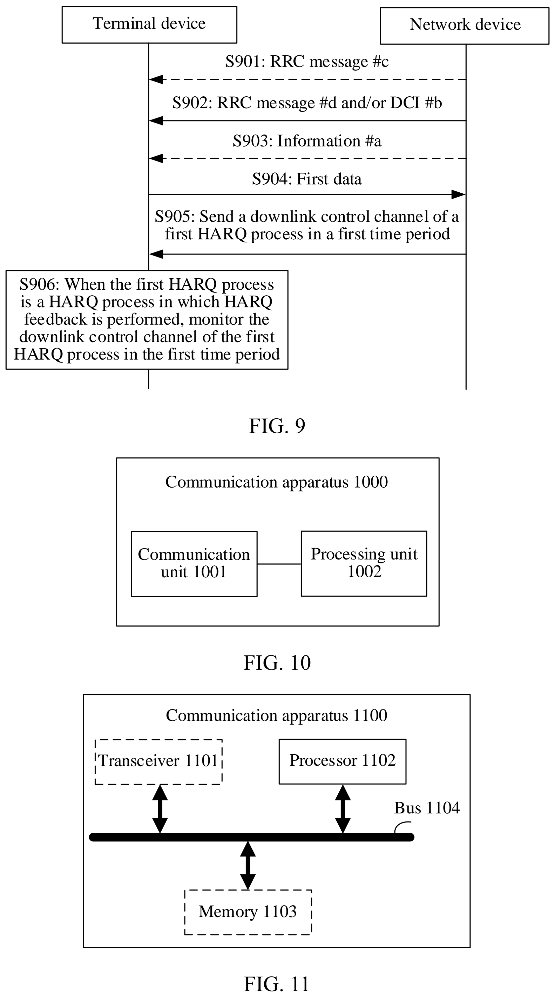

An embodiment of this application provides yet another communication method. The method shows still another possible example of the method shown in FIG. 5, and may be applied to the communication system shown in FIG. 1 to FIG. 3. The following specifically describes a procedure of the method with reference to a flowchart shown in FIG. 9 by using an example in which a first apparatus is a terminal device, a second apparatus is a network device, and a first timer is a HARQ RTT timer.

S901: The network device sends an RRC message #c to the terminal device. The RRC message #c indicates that DCI can indicate a mode of a first HARQ process.

For example, the RRC message #c is ulHARQmode-dci. When ulHARQmode-dci is in a second state, the DCI can indicate the mode of the first HARQ process, to indirectly indicate whether to perform HARQ feedback in the first HARQ process. For specific content of the RRC message #a, refer to the first information in the implementation 2 in S503. Details are not described herein again.

S901 is an optional step.

S902: The network device sends an RRC message #d and/or DCI #b to the terminal device. The RRC message #d and/or the DCI #b indicate/indicates the mode of the first HARQ process, to indirectly indicate whether to perform HARQ feedback in the first HARQ process.

For specific content of S902, refer to the descriptions of the manner of indicating, by using the RRC message and/or the DCI, whether to perform HARQ feedback in the first HARQ process in S503. Details are not described herein again.

S903: The network device sends information #a to the terminal device. The information #a indicates that for the first HARQ process in which HARQ feedback is performed, a HARQ RTT timer of the first HARQ process is not started after data of the first HARQ process is sent or received.

For specific content of S903, refer to S703. Details are not described herein again.

A sending sequence of the RRC message #c, the RRC message #d, and the information #a is not limited in this application, and a sending sequence of the information #a and the DCI #b is not limited either.

S903 is an optional step. For example, when the method shown in FIG. 9 includes or does not include S901, the method shown in FIG. 9 may include S903. For another example, when the method shown in FIG. 9 includes S901, the method shown in FIG. 9 may not include S903. In this case, it may be specified that for the first HARQ process in which HARQ feedback is performed, the HARQ RTT timer of the first HARQ process is not started after the data of the first HARQ process is sent or received; or if the DCI indicates that the first HARQ process is a HARQ process in which HARQ feedback is performed, the HARQ RTT timer of the first HARQ process is not started after the data of the first HARQ process is sent or received.

S904: The terminal device sends first data of the first HARQ process to the network device. The first data may be carried on a PUSCH or an NPUSCH.

After sending the first data, the terminal device may determine to start or not to start the HARQ RTT timer. For a manner in which the terminal device determines to start or not to start the HARQ RTT timer, refer to the implementation 1 and the implementation 2 of S503. Details are not repeated.

Optionally, when the first HARQ process is a HARQ process in which HARQ feedback is performed, and at least one of the following conditions b1 to b3 is satisfied, the terminal device does not start the HARQ RTT timer after sending the first data:

Condition b1: The terminal device receives the information #a in S903. The information #a indicates that for the first HARQ process in which HARQ feedback is performed, the HARQ RTT timer of the first HARQ process is not started after the data of the first HARQ process is sent or received.

Condition b2: The terminal device receives the information #a in S903. The information #a indicates that if the DCI indicates that the first HARQ process is a HARQ process in which HARQ feedback is performed, the HARQ RTT timer of the first HARQ process is not started after the data of the first HARQ process is sent or received. In addition, the DCI #b in S902 indicates that the mode of the first HARQ process is a HARQ mode A, to indirectly indicate that HARQ feedback is performed in the first HARQ process.

Condition b3: The terminal device receives the RRC message #c in S901.

S905: When the first HARQ process is a HARQ process in which HARQ feedback is performed, the network device sends a downlink control channel of the first HARQ process in a first time period. The downlink control channel may carry DCI used for scheduling next data of the first HARQ process.

The first time period satisfies the following condition: A time interval between a start time unit of the first time period and an end time unit in which the first apparatus sends the first data is a fifth time interval, and a value of the fifth time interval is a second value. For specific content of the condition, refer to the descriptions of the condition 3 in S505. Details are not described herein again.

S906: When the first HARQ process is a HARQ process in which HARQ feedback is performed, the terminal device monitors the downlink control channel of the first HARQ process in the first time period. The downlink control channel may carry DCI used for scheduling the next data of the first HARQ process.

For specific content of the first time period, refer to S905. For specific content of S906, refer to the descriptions of S505 and S707. Details are not described herein again.

According to the method shown in FIG. 9, for uplink data transmission, when the first HARQ process is a HARQ process in which HARQ feedback is performed, and the DCI can indicate whether to perform HARQ feedback in the first HARQ process, the terminal device does not start the HARQ RTT timer after receiving the first data of the first HARQ process. In this way, the terminal device does not miss detecting the DCI of the first HARQ process, so that a system throughput can be improved.

In addition, in the method, when the first HARQ process is a HARQ process in which HARQ feedback is performed, the network device does not send the downlink control channel of the first HARQ process in the fifth time interval after the end time unit in which the terminal device sends the first data, to avoid uplink and downlink collision between the downlink control channel and the first data, improving communication quality.

Based on a same technical concept as the method embodiments in FIG. 5 to FIG. 9, an embodiment of this application provides a communication apparatus in FIG. 10, and the communication apparatus may be configured to perform functions of related steps in the foregoing method embodiments. The functions may be implemented by hardware, or may be implemented by software or by hardware executing corresponding software. The hardware or the software includes one or more modules corresponding to the foregoing functions. A structure of the communication apparatus is shown in FIG. 10, and includes a communication unit 1001 and a processing unit 1002. The communication apparatus 1000 may be used in a terminal device or a network device, and may implement the communication method provided in the foregoing embodiments and examples of this application. Functions of the units in the communication apparatus 1000 are described below.

The communication unit 1001 is configured to receive data and send data. In some manners, the communication unit 1001 may be implemented through a physical interface, a communication module, a communication interface, and an input/output interface. The communication apparatus 1000 may be connected to a network cable or a cable by using the communication unit, to establish a physical connection with another device. In some other manners, the communication unit 1001 may be implemented by using a transceiver, for example, a mobile communication module. The mobile communication module may include at least one antenna, at least one filter, a switch, a power amplifier, a low noise amplifier (low noise amplifier, LNA), and the like.

The processing unit 1002 may be configured to support the communication apparatus 1000 in performing processing actions in the foregoing method embodiments. The processing unit 1002 may be implemented by using a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

In an implementation, the communication apparatus 1000 is used in the first apparatus in the embodiment of this application shown in FIG. 5, or is used in the terminal device in the embodiment of this application shown in any one of FIG. 7 to FIG. 9. The following describes specific functions of the processing unit 1002 in the implementation.

The processing unit 1002 is configured to: receive first information from a second apparatus by using the communication unit 1001; and determine, based on the first information and whether to perform HARQ feedback in a first HARQ process, to start or not to start a first timer after sending or receiving data of the first HARQ process, where the first apparatus is in a low power consumption state when the first timer is started.

In some possible manners, the processing unit 1002 is configured to: when the first HARQ process is a HARQ process in which HARQ feedback is performed, and the first information indicates a first state, determine to start the first timer after sending or receiving the data.

Optionally, when the first information indicates the first state, downlink control information cannot indicate whether to perform HARQ feedback in the first HARQ process.

In some other possible manners, the processing unit 1002 is configured to: when the first HARQ process is a HARQ process in which HARQ feedback is performed, and the first information indicates a second state, determine not to start the first timer after sending or receiving the data.

Optionally, when the first information indicates the second state, the downlink control information can indicate whether to perform HARQ feedback in the first HARQ process.

In still some other possible manners, the first information indicates a plurality of time periods in which the first timer is allowed to be started, the plurality of time periods each have same duration, and a time interval between every two adjacent time periods in the plurality of time periods is a first time interval. The processing unit 1002 is configured to:
in any one of the plurality of time periods, if the first HARQ process is a HARQ process in which HARQ feedback is performed, determine to start the first timer after sending or receiving the data; or if the first HARQ process is a HARQ process in which no HARQ feedback is performed, determine not to start the first timer after sending or receiving the data; and/or
in a time period other than the plurality of time periods, determine not to start the first timer after sending or receiving the data.

For example, the first timer is a HARQ RTT timer.

In a possible implementation, the processing unit 1002 is configured to: when the first HARQ process is a HARQ process in which HARQ feedback is performed, monitor a downlink control channel of the first HARQ process in a first time period, where the first time period satisfies one of the following conditions:
an interval between a start time unit of the first time period and an end time unit in which the first apparatus receives the data is a second time interval, a value of the second time interval is kmac+N+M, kmac is a value of a third time interval, the third time interval is a time interval between an uplink time unit and a downlink time unit that have a same number on a second apparatus side, N is a quantity of time units occupied by HARQ feedback of the data, and M is a specified offset value;
a time interval between a start time unit of the first time period and an end time unit in which the first apparatus sends HARQ feedback of the data is a fourth time interval, and a value of the fourth time interval is a first value; or
a time interval between a start time unit of the first time period and an end time unit in which the first apparatus sends the data is a fifth time interval, and a value of the fifth time interval is a second value.

For example, M is one of the following: 1, 2, 3, 4, or P+DeltaPDCCH. P is 1, 2, 3, or 4. DeltaPDCCH is a value of a time interval between a first time unit and a start time unit of a first downlink control channel occasion. The first time unit is a time unit determined based on kmac+N+P. The first downlink control channel occasion is a downlink control channel occasion that is after the first time unit and that is closest to the first time unit.

In another implementation, the communication apparatus 1000 is used in the second apparatus in the embodiment of this application shown in FIG. 5, or is used in the network device in the embodiment of this application shown in any one of FIG. 7 to FIG. 9. The following describes specific functions of the processing unit 1002 in the implementation.

The processing unit 1002 is configured to: obtain first information; and send the first information to a first apparatus by using the communication unit 1001. The first information is used by the first apparatus to determine, based on the first information and whether to perform HARQ feedback in a first HARQ process, to start or not to start a first timer after data of the first HARQ process is sent or received. The first apparatus is in a low power consumption state when the first timer is started.

In some possible manners, when the first HARQ process is a HARQ process in which HARQ feedback is performed, and the first information indicates a first state, the first information is used for determining to start the first timer after the data is sent or received.

Optionally, when the first information indicates the first state, downlink control information cannot indicate whether to perform HARQ feedback in the first HARQ process.

In some other possible manners, when the first HARQ process is a HARQ process in which HARQ feedback is performed, and the first information indicates a second state, the first information is used for determining not to start the first timer after the data is sent or received.

Optionally, when the first information indicates the second state, the downlink control information can indicate whether to perform HARQ feedback in the first HARQ process.

In still some other possible manners, the first information indicates a plurality of time periods in which the first timer is allowed to be started, the plurality of time periods each have same duration, and a time interval between every two adjacent time periods in the plurality of time periods is a first time interval. In any one of the plurality of time periods, if the first HARQ process is a HARQ process in which HARQ feedback is performed, the first information is used for determining to start the first timer after the data is sent or received; or if the first HARQ process is a HARQ process in which no HARQ feedback is performed, the first information is used for determining not to start the first timer after the data is sent or received; and/or in a time period other than the plurality of time periods, the first information is used for determining not to start the first timer after the data is sent or received.

For example, the first timer is a HARQ RTT timer.

In a possible implementation, the processing unit 1002 is configured to: when the first HARQ process is a HARQ process in which HARQ feedback is performed, send a downlink control channel of the first HARQ process in a first time period by using the communication unit 1001, where the first time period satisfies one of the following conditions:
an interval between a start time unit of the first time period and an end time unit in which the first apparatus receives the data is a second time interval, a value of the second time interval is kmac+N+M, kmac is a value of a third time interval, the third time interval is a time interval between an uplink time unit and a downlink time unit that have a same number on a second apparatus side, N is a quantity of time units occupied by HARQ feedback of the data, and M is a specified offset value;
a time interval between a start time unit of the first time period and an end time unit in which the first apparatus sends HARQ feedback of the data is a fourth time interval, and a value of the fourth time interval is a first value; or
a time interval between a start time unit of the first time period and an end time unit in which the first apparatus sends the data is a fifth time interval, and a value of the fifth time interval is a second value.

For example, M is one of the following: 1, 2, 3, 4, or P+DeltaPDCCH. P is 1, 2, 3, or 4. DeltaPDCCH is a value of a time interval between a first time unit and a start time unit of a first downlink control channel occasion. The first time unit is a time unit determined based on kmac+N+P. The first downlink control channel occasion is a downlink control channel occasion that is after the first time unit and that is closest to the first time unit.

It should be noted that, in the foregoing embodiment of this application, division into the modules is an example, is merely logical function division, and may be other division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or a part of the technical solutions may be implemented in the form of a software product. A computer software product is stored in a storage medium and includes several instructions for instructing a computer device (which may be a personal computer, a server, or a network device) or a processor to perform all or a part of the steps of the methods in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

Based on a same technical concept, an embodiment of this application provides a communication apparatus shown in FIG. 11, and the communication apparatus may be configured to perform related steps in the foregoing method embodiments. The communication apparatus may be used in a terminal device or a network device, may implement the communication method provided in the foregoing embodiments and the examples of this application, and has a function of the communication apparatus shown in FIG. 10. With reference to FIG. 11, the communication apparatus 1100 includes a processor 1102. Optionally, the communication apparatus 1100 further includes a transceiver 1101 and a memory 1103. The transceiver 1101, the processor 1102, and the memory 1103 are connected to each other.

Optionally, the transceiver 1101, the processor 1102, and the memory 1103 are connected to each other by using a bus 1104. The bus 1104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

The transceiver 1101 is configured to receive data and send data, to implement communication interaction with another device. For example, the transceiver 1101 may be implemented through a physical interface, a communication module, a communication interface, and an input/output interface.

The processor 1102 may be configured to support the communication apparatus 1100 in performing processing actions in the foregoing method embodiments. When the communication apparatus 1100 is configured to implement the foregoing method embodiments, the processor 1102 may be further configured to implement functions of the foregoing processing unit 1002. The processor 1102 may be a CPU, or may be another general-purpose processor, a DSP, an ASIC, an FPGA or another programmable logic device, a transistor logic device, a hardware component, or any combination thereof. The general-purpose processor may be a microprocessor or any regular processor or the like.

In an implementation, the communication apparatus 1100 is used in the first apparatus in the embodiment of this application shown in FIG. 5, or is used in the terminal device in the embodiment of this application shown in any one of FIG. 7 to FIG. 9. The following describes specific functions of the processor 1102 in the implementation.

The processor 1102 is configured to: receive first information from a second apparatus by using the transceiver 1101; and determine, based on the first information and whether to perform HARQ feedback in a first HARQ process, to start or not to start a first timer after sending or receiving data of the first HARQ process, where the first apparatus is in a low power consumption state when the first timer is started.

In another implementation, the communication apparatus 1100 is used in the second apparatus in the embodiment of this application shown in FIG. 5, or is used in the network device in the embodiment of this application shown in any one of FIG. 7 to FIG. 9. The following describes specific functions of the processor 1102 in the implementation.

The processor 1102 is configured to: obtain first information; and send the first information to a first apparatus by using the transceiver 1101. The first information is used by the first apparatus to determine, based on the first information and whether to perform HARQ feedback in a first HARQ process, to start or not to start a first timer after data of the first HARQ process is sent or received. The first apparatus is in a low power consumption state when the first timer is started.

For a specific function of the processor 1102, refer to the descriptions in the communication method provided in the foregoing embodiments and examples of this application, and the specific function descriptions of the communication apparatus 1000 in the embodiment of this application shown in FIG. 10. Details are not described herein again.

The memory 1103 is configured to store program instructions, data, and/or the like. Specifically, the program instructions may include program code, and the program code includes computer operation instructions. The memory 1103 may include a RAM, and may further include a non-volatile memory (non-volatile memory), for example, at least one magnetic disk memory. The processor 1102 executes the program instructions stored in the memory 1103, and uses the data stored in the memory 1103, to implement the foregoing functions, so as to implement the communication method provided in the foregoing embodiments of this application. The memory 1103 may be integrated with the processor 1102, or may be a memory outside the communication apparatus.

It may be understood that the memory 1103 in the FIG. 11 of this application may be a volatile memory or a non-volatile memory, or may include a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and is used as an external cache. Through illustrative but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the systems and methods described in this specification includes but is not limited to memories of these and any other appropriate types.

Based on the foregoing embodiments, an embodiment of this application further provides a computer program product including computer executable instructions. When the computer program product is run, the method provided in the foregoing embodiments is performed.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete device.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware-only embodiments, software-only embodiments, or embodiments combining software and hardware. Moreover, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, generating computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving, by a first apparatus, first information from a second apparatus; and
determining, by the first apparatus based on the first information and whether to perform HARQ feedback in a first hybrid automatic repeat HARQ process, to start or not to start a first timer after sending or receiving data of the first HARQ process, wherein the first apparatus is in a low power consumption state when the first timer is started.

2. The method according to claim 1, wherein determining, by the first apparatus based on the first information and whether to perform HARQ feedback in the first HARQ process, to start or not to start the first timer after sending or receiving the data of the first HARQ process comprises:
when the first HARQ process is a HARQ process in which HARQ feedback is performed, and the first information indicates a first state, determining, by the first apparatus, to start the first timer after sending or receiving the data; and/or
when the first HARQ process is a HARQ process in which HARQ feedback is performed, and the first information indicates a second state, determining, by the first apparatus, not to start the first timer after sending or receiving the data.

3. The method according to claim 2, wherein when the first information indicates the first state, downlink control information cannot indicate whether to perform HARQ feedback in the first HARQ process; and/or when the first information indicates the second state, the downlink control information can indicate whether to perform HARQ feedback in the first HARQ process.

4. The method according to claim 1, wherein the first information indicates a plurality of time periods in which the first timer is allowed to be started, the plurality of time periods each have same duration, and a time interval between every two adjacent time periods in the plurality of time periods is a first time interval; and
determining, by the first apparatus based on the first information and whether to perform HARQ feedback in the first HARQ process, to start or not to start the first timer after sending or receiving the data of the first HARQ process comprises:
in any one of the plurality of time periods, if the first HARQ process is a HARQ process in which HARQ feedback is performed, determining, by the first apparatus, to start the first timer after sending or receiving the data; or if the first HARQ process is a HARQ process in which no HARQ feedback is performed, determining, by the first apparatus, not to start the first timer after sending or receiving the data; and/or
in a time period other than the plurality of time periods, determining, by the first apparatus, not to start the first timer after sending or receiving the data.

5. The method according to any one of claims 1 to 4, wherein the first timer is a HARQ round-trip time RTT timer.

6. The method according to any one of claims 1 to 5, wherein the first HARQ process is a HARQ process in which HARQ feedback is performed, and the method further comprises:
monitoring, by the first apparatus, a downlink control channel of the first HARQ process in a first time period, wherein the first time period satisfies one of the following conditions:
an interval between a start time unit of the first time period and an end time unit in which the first apparatus receives the data is a second time interval, a value of the second time interval is kmac+N+M, kmac is a value of a third time interval, the third time interval is a time interval between an uplink time unit and a downlink time unit that have a same number on the second apparatus side, N is a quantity of time units occupied by HARQ feedback of the data, and M is a specified offset value;
a time interval between a start time unit of the first time period and an end time unit in which the first apparatus sends HARQ feedback of the data is a fourth time interval, and a value of the fourth time interval is a first value; or
a time interval between a start time unit of the first time period and an end time unit in which the first apparatus sends the data is a fifth time interval, and a value of the fifth time interval is a second value.

7. The method according to claim 6, wherein M is one of the following: 1, 2, 3, 4, or P+DeltaPDCCH; and
P is 1, 2, 3, or 4, DeltaPDCCH is a value of a time interval between a first time unit and a start time unit of a first downlink control channel occasion, the first time unit is a time unit determined based on kmac+N+P, and the first downlink control channel occasion is a downlink control channel occasion that is after the first time unit and that is closest to the first time unit.

8. A communication method, comprising:
obtaining, by a second apparatus, first information; and
sending, by the second apparatus, the first information to a first apparatus, wherein the first information is used by the first apparatus to determine, based on the first information and whether to perform HARQ feedback in a first hybrid automatic repeat HARQ process, to start or not to start a first timer after data of the first HARQ process is sent or received, and when the first timer is started, the first apparatus is in a low power consumption state.

9. The method according to claim 8, wherein
when the first HARQ process is a HARQ process in which HARQ feedback is performed, and the first information indicates a first state, the first information is used for determining to start the first timer after the data is sent or received; and/or
when the first HARQ process is a HARQ process in which HARQ feedback is performed, and the first information indicates a second state, the first information is used for determining not to start the first timer after the data is sent or received.

10. The method according to claim 9, wherein when the first information indicates the first state, downlink control information cannot indicate whether to perform HARQ feedback in the first HARQ process; and/or when the first information indicates the second state, the downlink control information can indicate whether to perform HARQ feedback in the first HARQ process.

11. The method according to claim 8, wherein the first information indicates a plurality of time periods in which the first timer is allowed to be started, the plurality of time periods each have same duration, and a time interval between every two adjacent time periods in the plurality of time periods is a first time interval; and
in any one of the plurality of time periods, if the first HARQ process is a HARQ process in which HARQ feedback is performed, the first information is used for determining to start the first timer after the data is sent or received; or if the first HARQ process is a HARQ process in which no HARQ feedback is performed, the first information is used for determining not to start the first timer after the data is sent or received; and/or
in a time period other than the plurality of time periods, the first information is used for determining not to start the first timer after the data is sent or received.

12. The method according to any one of claims 8 to 11, wherein the first timer is a HARQ round-trip time RTT timer.

13. The method according to any one of claims 8 to 12, wherein the first HARQ process is a HARQ process in which HARQ feedback is performed, and the method further comprises:
sending, by the second apparatus, a downlink control channel of the first HARQ process in a first time period, wherein the first time period satisfies one of the following conditions:
an interval between a start time unit of the first time period and an end time unit in which the first apparatus receives the data is a second time interval, a value of the second time interval is kmac+N+M, kmac is a value of a third time interval, the third time interval is a time interval between an uplink time unit and a downlink time unit that have a same number on the second apparatus side, N is a quantity of time units occupied by HARQ feedback of the data, and M is a specified offset value;
a time interval between a start time unit of the first time period and an end time unit in which the first apparatus sends HARQ feedback of the data is a fourth time interval, and a value of the fourth time interval is a first value; or
a time interval between a start time unit of the first time period and an end time unit in which the first apparatus sends the data is a fifth time interval, and a value of the fifth time interval is a second value.

14. The method according to claim 13, wherein M is one of the following: 1, 2, 3, 4, or P+DeltaPDCCH; and
P is 1, 2, 3, or 4, DeltaPDCCH is a value of a time interval between a first time unit and a start time unit of a first downlink control channel occasion, the first time unit is a time unit determined based on kmac+N+P, and the first downlink control channel occasion is a downlink control channel occasion that is after the first time unit and that is closest to the first time unit.

15. A communication apparatus, comprising:
a communication unit, configured to receive data and send data; and
a processing unit, configured to perform the method according to any one of claims 1 to 14 by using the communication unit.

16. A communication apparatus, comprising a processor, wherein the processor is configured to perform the method according to any one of claims 1 to 14.

17. A communication system, comprising:
a first apparatus, configured to implement the method according to any one of claims 1 to 7; and
a second apparatus, configured to implement the method according to any one of claims 8 to 14.

18. A computer-readable storage medium, wherein the computer-readable storage medium stores a computer program or instructions; and when the computer program or the instructions are executed by a communication apparatus, the method according to any one of claims 1 to 14 is implemented.

19. A chip, wherein the chip is coupled to a memory, and the chip reads a computer program stored in the memory, to perform the method according to any one of claims 1 to 14.

20. A computer program product, wherein the computer program product comprises computer program code, and when the computer program code is run, the method according to any one of claims 1 to 14 is implemented.
